Europäisches Patentamt

European Patent Office

Office européen des brevets

(11) Veröffentlichungsnummer: **0 467 254 A1**

# EUROPÄISCHE PATENTANMELDUNG

(21) Anmeldenummer: **91111727.3**

(51) Int. Cl.⁵: **F16L 49/00**

(22) Anmeldetag: **12.07.91**

(30) Priorität: **13.07.90 US 553071**

(43) Veröffentlichungstag der Anmeldung:
**22.01.92 Patentblatt 92/04**

(84) Benannte Vertragsstaaten:
**AT BE CH DE DK ES FR GB GR IT LI LU NL**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Schindler, Stefan, Dr.**
**Virnebergstrasse 32**
**W-5342 Rheinbreitbach(DE)**
Erfinder: **Schultze, Werner, Dr.**
**Brüsseler Strasse 60a**
**W-5300 Bonn 1(DE)**

(74) Vertreter: **Müller-Wolff, Thomas, Dipl.-Ing.**
**Georg-von-Boeselager-Strasse 25 Postfach 2468**
**W-5300 Bonn 1(DE)**

(54) **Hitzebeständige Rohrleitung.**

(57) Hitzebeständige Rohrleitung, die aus mehreren Rohrabschnitten besteht, wobei die Enden von jeweils zwei Rohrabschnitten (1, 2) so ineinandergesteckt sind, daß eine Verbindungsstelle entsteht, und daß diese Verbindungsstelle durch ein unter Druck stehendes Sperrmedium abgedichtet ist.

FIG. 1

Rank Xerox (UK) Business Services

Die Erfindung betrifft eine hitzebeständige Rohrleitung, bestehend aus mehreren Rohrabschnitten, die mit ungleichmäßiger Temperatur beaufschlagt sind.

Es ist bekannt, daß beim Einsatz keramischer Rohrleitungen durch ungleichmäßige Temperaturverteilung Wärmespannungen in den Rohren auftreten. Diese Spannungen entstehen durch starke Temperaturunterschiede in benachbarten Rohrbereichen. Ungleichmäßige Temperaturverteilungen bestehen z. B. im Bereich sehr steiler Temperaturgradienten in den Rohren von Rohröfen, Rohraufschlußanlagen, Drehrohröfen oder ähnlichen Hochtemperatur-Heizanlagen, die in der Regel auf einem Aluminiumoxidmaterial basieren. Insbesondere am Übergang von beheizten Zonen in kühlere Bereiche typischer Ofenaggregate liegen derartig steile Temperaturgradienten vor. Die dadurch bedingten Wärmespannungen führen zu einer Rißbildung oder im Extremfall zur Zerstörung der Rohre. Dies ist insbesondere dann der Fall, wenn die Rohraggregate großdimensioniert sind und das Rohrmaterial zudem eine schlechte Wärmeleitfähigkeit besitzt. Eine zusätzliche Gefahr ergibt sich durch intermittierenden Ofenbetrieb, da in diesem Fall sehr steile Temperaturgradienten jeweils beim Wechsel der Betriebsbedingungen auftreten.

Aufgabe der vorliegenden Erfindung ist es, hitzebeständige Rohrleitungen bzw. Rohraggregate zu entwickeln, die ohne die Gefahr einer Rißbildung und Zerstörung mit einer ungleichmäßigen Temperatur beaufschlagt werden können. Die Rohrleitungen bzw. Rohraggregate sollen bei ungleichmäßiger Temperaturbelastung, insbesondere auch bei Betriebstemperaturen von über 1000 $^\circ$c, auch gegenüber einer hochkorrosiven Umgebung sicher abgedichtet sein.

Eine weitere Aufgabe besteht darin, drehbare Rohrleitungen bzw. Rohraggregate für die Verwendung in Zonen mit steilen Temperaturgradienten zu schaffen, die aus verschiedenen Materialien zusammengesetzt sein können und wartungsarm ausgebildet sind.

Erfindungsgemäß wird diese Aufgabe dadurch gelöst, daß die Rohrleitungen bzw. Rohraggregate aus mehreren Rohrabschnitten zusammengesetzt werden. Die Verbindungsstellen werden dabei in den Bereichen mit steilen Temperaturgradienten angeordnet. Vorteil dieser Konstruktion gegenüber durchgehend ausgeführten Rohrleitungen bzw. Rohraggregaten ist, daß die durch starke Temperatursprünge auftretenden Wärmespannungen in den Verbindungsstellen abgebaut werden. Dadurch ist es möglich, auch großdimensionierte Anlagen dieser Art zu betreiben, ohne die Gefahr einer Rißbildung oder Zerstörung der Rohre.

In bevorzugter Ausführungsform sind die einzelnen Rohrabschnitte an den Verbindungsstellen mit umlaufenden Absätzen versehen, so daß eine paßgenaue Steckverbindung erzielt wird. Dabei bestehen die Rohrabschnitte 1 in den heißen Zonen > 800 $^\circ$C vorzugsweise aus oxidkeramischen Werkstoffen. Die Rohrabschnitte 2 in den kälteren Bereichen können aus keramischen oder metallischen Werkstoffen bestehen.

Bei gasdicht betriebenen Anlagen mit Rohrleitungen bzw. Rohraggregaten, in denen sich z. B. korrosive, toxische oder andere gefährliche Medien befinden, müssen zwangsläufig entstehende Spalte im Verbindungsbereich zwischen den einzelnen Rohrabschnitten abgedichtet werden. Bekannte Dichtungsmaterialien sind allerdings bei höheren Betriebstemperaturen nicht beständig, insbesondere dann, wenn ein gleichzeitiger Kontakt mit korrosiven Stoffen, wie z. B. Halogenen oder Halogeniden, besteht.

Erfindungsgemäß werden die Verbindungsstellen mittels eines unter Druck stehenden Sperrmediums beständig und sicher abgedichtet. Zu diesem Zweck wird über die Verbindungsstellen ein weiterer Rohrabschnitt 3, vorzugsweise aus einem keramischen oder metallischen Werkstoff, geschoben. In diesem Rohrabschnitt 3 befindet sich eine Längsnut 4, die über eine Bohrung 5 im äußeren Teil der Verbindungsstelle ragt. Unterhalb dieser Bohrung verläuft im darunterliegenden inneren Teil der Verbindungsstelle eine umlaufende Nut 6. Die Längsnut 4 im äußeren Rohrabschnitt 3 wird mit einem Sperrmedium unter geringem Überdruck beaufschlagt. Auf diese Weise entsteht ein Druckpolster in der umlaufenden Nut 6, durch das der Spalt innerhalb der Verbindungsstelle abgedichtet wird.

Bei sich drehenden Anlagen, wie z. B. Drehrohröfen kann um den äußeren Rohrabschnitt 3 und den Rohrabschnitt 2 außerhalb der heißen Zone eine gegenüber der Drehbewegung ruhende Kammer 8 angeordnet werden. Diese Kammer ist gegenüber den Rohrabschnitten 2, 3 mittels herkömmlicher Dichtungssysteme 11, z. B. Gleitdichtungssysteme, abgedichtet.

Die Erfindung wird nachfolgend anhand von Zeichnungen und Ausführungsbeispielen näher erläutert.

Die Zeichnungen zeigen in

Fig. 1    einen Längsschnitt einer erfindungsgemäßen drehbaren hitzebeständigen Rohrleitung

Fig. 1a   einen charakteristischen Temperaturverlauf in der erfindungsgemäßen hitzebeständigen Rohrleitung gemäß Fig. 1

Fig. 2    den Querschnitt (Schnitt 2-2) der in Fig. 1 dargestellten Rohrleitung.

Der Rohrabschnitt 1, der sich in einer heißen Rohrleitungszone mit Temperaturen > 800 $^\circ$C befindet, besteht vorzugsweise aus einem oxidkerami-

schen Werkstoff, z. B. auf der Basis von Aluminiumoxid. Der Rohrabschnitt 1 ist beidseitig an den Enden 1a nach innen abgesetzt. Die Absätze 13 des Rohrabschnitts 1 sind jeweils mit einer umlaufenden Nut 6 versehen. Der Rohrabschnitt 2 befindet sich in einer kälteren Zone und besteht vorzugsweise aus einem metallischen Werkstoff. Der Rohrabschnitt 2 ist einseitig nach innen abgesetzt. Im Absatz 14 des Rohrabschnitts 2 befindet sich eine Bohrung 5.

Beide Rohrabschnitte 1 und 2 sind so ineinandergesteckt, daß eine formschlüssige Verbindung entsteht. Die Bohrung 5 mündet unmittelbar in die umlaufende Nut 6.

Bei gasdichten Anwendungen wird ein Rohrabschnitt 3 so über die Verbindungsstelle A geschoben, daß eine formschlüssige Verbindung mit Rohrabschnitt 1 entsteht. Der Rohrabschnitt 3 weist eine Längsnut 4 auf, die über die Bohrung 5 und den Spalt zwischen den Rohrabschnitten 1 und 2 ragt. Vorzugsweise besteht der Rohrabschnitt 3 aus einem keramischen Werkstoff. Auf das offene Ende des Rohrabschnitts 3 ist ein Ring 10 aufgeschrumpft, oder nach Metallisierung des keramischen Werkstoffs, aufgelötet. Der Ring 10 besteht vorzugsweise aus einem metallischen Werkstoff. Geeignete metallische Werkstoffe für den Ring 10 sind z. B. Stahl, Gußeisen oder Kupfer. Durch den Ring 10 wird eine dichte Verbindung zur Sperrmediumkammer 8 gewährleistet.

Die Rohrabschnitte 2 und 3 sind mittels eines herkömmlichen Gleitdichtungssystems 11 drehbar in der Sperrmediumkammer 8 gelagert. Ein Sperrmedium wird unter leichtem Überdruck (über dem im Rohrinneren herrschenden Druck) von der Sperrmediumquelle 9 über eine Rohrleitung 12 der Kammer 8 zugeführt. Das Sperrmedium gelangt über die Längsnut 4 und Bohrung 5 in die Nut 6. In der Nut 6 bildet sich durch das Sperrmedium ein Druckpolster aus, durch das die Verbindungsstelle A abgedichtet wird.

Besonders geeignete Sperrmedien sind Gase, wie z. B. Luft, Stickstoff oder Edelgase, wie z. B. Helium oder Argon. Das bevorzugte Sperrmedium ist Argon. Das Sperrmedium kann in Abhängigkeit von der Verwendung des Rohrs und/oder der Reaktion im Rohr ausgewählt werden. In der Regel wird das kostengünstigste und für die Anwendung am besten geeignete Sperrmedium eingesetzt.

Der Rohrabschnitt 1 besteht vorzugsweise aus einem keramischen Werkstoff mit einem Durchmesser von 500 bis 2000 mm und einer Wanddikke von 10 bis 50 mm, wobei die Wand eine mehrlagige Schichtstruktur aufweist. Vorzugsweise besteht zumindest einer der beiden Rohrabschnitte 1 und 2 aus einem keramischen Werkstoff, wie z. B. Oxidkeramik, und der andere Rohrabschnitt aus einem metallischen Werkstoff. Ein geeigneter oxidkeramischer Werkstoff für die Rohrabschnitte 1 und 2 ist Aluminiumoxid. Ebenfalls geeignet sind keramische Werkstoffe, die auf $Al_2O_3$ basieren, wie z. B. $Al_2O_3 \cdot MgO$, $Al_2O_3 \cdot SiO_2$ und $Al_2O_3 \cdot TiO_2$ sowie $ZrO_2$ und auf $ZrO_2$ basierende Keramikwerkstoffe, wie z. B. $ZrSiO_4$.

In vorteilhafter Weise werden die keramischen Rohrabschnitte hergestellt durch Aufspritzen des keramischen Werkstoffs auf einen als Form dienenden metallischen Spritzkern unter Verwendung der Plasma-Spritztechnik. Dieses Verfahren wird ausführlich beschrieben in der Veröffentlichung "Plasma Generated Oxide Ceramic Components" von S. Schindler und W. Schultze in InterCeram 37 (1988) [2] 39 - 42. Es hat sich zudem als vorteilhaft erwiesen, die plasmagespritzten Rohrabschnitte mit einer Beschichtung auf Zirkonoxidbasis zu versehen.

Bei dieser Plasma-Spritztechnik wird mittels eines Brenners ein Hochtemperatur-Wasserstoff-Sauerstoff-Plasma erzeugt. Das Plasma erreicht in seinem Zentrum eine Temperatur von 15.000 °C und verläßt den Brenner mit hoher Geschwindigkeit als Strahl. In den Plasmastrahl wird beim Austritt aus dem Brennergehäuse Keramikpulver eingedüst. Das Pulver wird im Plasmastrahl oberflächlich aufgeschmolzen und mit hoher Geschwindigkeit auf den metallischen Spritzkern geschleudert. Beim Aufprall verformen sich die Pulverpartikel und bilden unter schneller Abkühlung einen festen Verbund untereinander. Zur Herstellung von rohrförmigen Teilen wird ein zylindrischer metallischer Spritzkern verwendet, der während des Spritzvorganges rotiert. Der fertige plasmagespritzte keramische Formkörper und der metallische Spritzkern lassen sich einfach voneinander trennen, da der Spritzkern bei der Abkühlung schrumpft. Der Spritzkern bleibt erhalten und kann wiederverwendet werden. Als besonders geeignet hat sich ein wasserstabilisiertes Plasma erwiesen.

Der Werkstoff für die oxidkeramischen Rohrabschnitte sollte eine Wärmeleitfähigkeit < 5 W/m*K und einen E-Modul > 10.000 N/mm² aufweisen.

Ausführungsbeispiele

Beispiel 1: Herstellung keramischer Rohrabschnitte

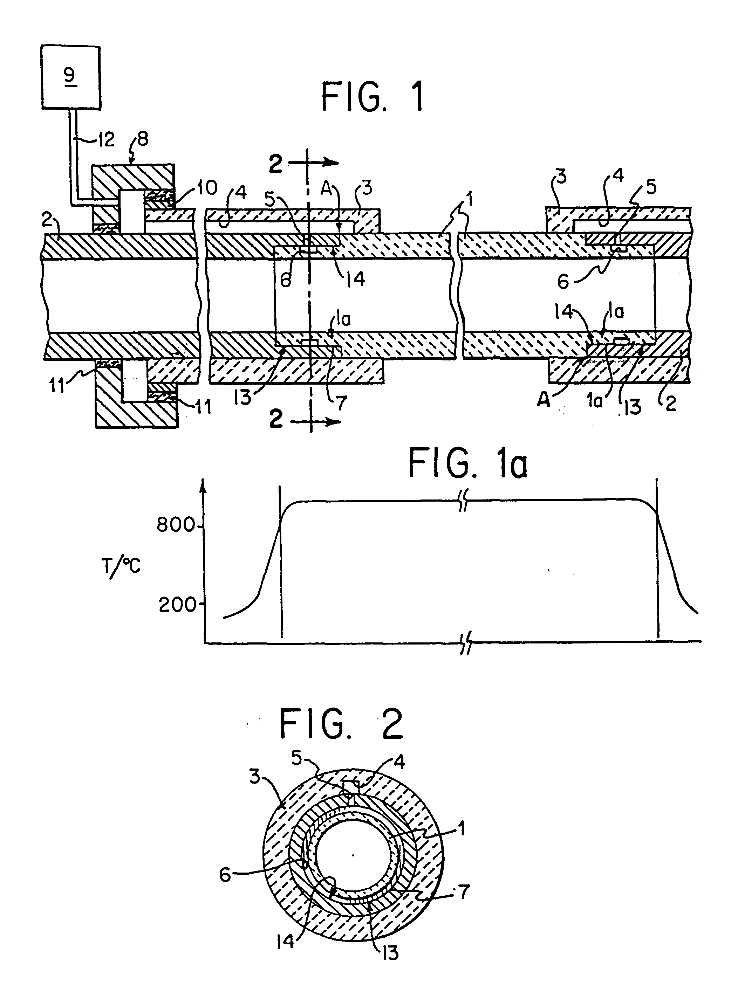

Zur Herstellung der erfindungsgemäßen keramischen Rohrabschnitte werden Rohrstücke aus einem keramischen Rohr herausgeschnitten. An den Enden der Rohrstücke werden die Absätze durch Abdrehen des Materials angebracht. Die erforderlichen Nuten und Bohrungen werden an den in Fig. 1 bezeichneten Stellen eingearbeitet. Diese mechanischen Bearbeitungsvorgänge werden mit Diamantwerkzeugen durchgeführt.

Beispiel 2: Anwendung in einem chemischen Rohrofen

Die nach Beispiel 1 hergestellten Rohrabschnitte werden in einem Reaktionsrohr-Aggregat zur Umsetzung von $SiCl_4$ mit $NH_3$ zu $Si_3N_4$ verwendet. Der mittlere Bereich des Reaktionsrohres wird mit einer Temperatur von etwa 1 000 $^\circ$C beaufschlagt. An den beiden Enden der beheizten Zone fällt die Temperatur auf einer Länge von etwa 1,5 m ab auf ca. 120 $^\circ$C. Das Reaktionsrohr hat einen Außendurchmesser von 250 mm, einen Innendurchmesser von 235 mm und eine Länge von 6,5 m. Die erfindungsgemäßen Rohrabschnitte werden in einem Abstand von 1,25 m und 5,25 m von einem Ende des Reaktionsrohres, d. h. im Bereich der steilen Temperaturgradienten eingesetzt. Die Verbindungsstellen werden gemäß Fig. 1 mit einem Sperrgas (Stickstoff) unter einem Druck von ca. 100 mbar beaufschlagt. Im Betrieb der Anlage strömen $SiCl_4$ und $NH_3$ durch das Innere der Rohrleitung. Im erzeugten $Si_3N_4$ kann kein Sauerstoff nachgewiesen werden. Dies ist gleichbedeutend damit, daß die Rohrleitung durch die Sperrgasverbindung gasdicht abgedichtet ist und dementsprechend ein geschlossenen System vorliegt.

Die erfindungsgemäßen keramischen Rohrabschnitte können in diesem Fall z. B. aus den folgenden keramischen Zusammensetzungen bestehen: Aluminiumoxid, Spinell, Mullit und Zirkonoxid.

Die erfindungsgemäßen keramischen Rohrabschnitte können Temperaturunterschieden zwischen 20 $^\circ$C und 1800 $^\circ$C oder mehr ausgesetzt werden, ohne daß Rißbildung oder gar Zerstörung erfolgt. Die durch das unter Druck stehende Sperrmedium beaufschlagte Verbindungsstelle hat neben der abdichtenden Wirkung zusätzlich eine Funktion als Dehnungsfuge. Dehnungen und Kontraktionen im Rohr können hier aufgefangen werden.

Heiße Zonen eines Rohres werden ermittelt durch eine Temperaturmessung an verschiedenen festgelegten Punkten entlang des Rohrs. Die keramischen Rohrabschnitte der vorliegenden Erfindung werden bevorzugt in Rohrbereichen eingesetzt, in denen sich die Temperatur um mehr als 500 $^\circ$C auf einer Länge von 0,2 Metern oder weniger ändert.

Das Gleitdichtungssystem 11 kann z. B. bestehen aus Grafit, Kupfer, Teflon oder Perbunan-Gummi. Vorzugsweise wird Grafit verwendet.

Es hat sich weiterhin als günstig erwiesen, die erfindungsgemäßen keramischen Rohrabschnitte mit einer Zirkonoxidbeschichtung zu versehen. Das hierzu verwendete Material besteht überwiegend aus feinem $ZrO_2$-Pulvr mit etwa 10 % Natrium- oder Kaliumsilikat. Eine derartige Oxidbeschichtung kann z. B. mit Hilfe einer Spritzpistole, wie sie auch zur Lackierung von Kraftfahrzeugen verwendet wird, aufgebracht werden. Die Dicke der Beschichtung beträgt ca. 0,3 mm bis 0,5 mm. Die Beschichtung dient vorzugsweise zur Abdichtung keramischer Rohre für gasdichte Anlagen.

**Patentansprüche**

1. Hitzebeständige Rohrleitung, dadurch gekennzeichnet, daß die Rohrleitung aus mehreren Rohrabschnitten besteht, wobei die Enden von jeweils zwei Rohrabschnitten (1, 2) so ineinandergesteckt sind, daß eine Verbindungsstelle entsteht, und daß diese Verbindungsstelle durch ein unter Druck stehendes Sperrmedium abgedichtet ist.

2. Hitzebeständige Rohrleitung nach Anspruch 1, dadurch gekennzeichnet, daß die Enden der Rohrabschnitte (1, 2) Absätze (13, 14) aufweisen, die sich im Bereich der Verbindungsstelle überlappen, wobei der innenliegende Absatz (13) des Rohrabschnitts (1) mindestens eine umlaufende Nut (6) aufweist und im außenliegenden Absatz (14) des Rohrabschnitts (2) mindestens eine radial verlaufende Bohrung (5) angebracht ist, die in der umlaufenden Nut (6) mündet, und das unter Druck stehende Sperrmedium über die Bohrung (5) in die umlaufende Nut (6) eingebracht wird.

3. Hitzebeständige Rohrleitung nach Anspruch 2, dadurch gekennzeichnet, daß die Verbindungsstelle im Überlappungsbereich mit einem weiteren Rohrabschnitt (3) abgedeckt ist, der mit dem Sperrmedium gefüllt ist.

4. Hitzebeständige Rohrleitung nach Anspurch 3, dadurch gekennzeichnet, daß der Rohrabschnitt (3) mindestens eine Längsnut (4) aufweist, die mit der Bohrung (5) und einer Sperrmediumquelle (9) in Verbindung steht.

5. Hitzebeständige Rohrleitung nach einem der vorhergehenden Ansprüche, dadurch gekennzeichnet, daß das Sperrmedium ein Gas, wie z. B. Luft, Stickstoff oder ein Edelgas ist.

6. Hitzebeständige Rohrleitung nach einem der vorhergehenden Ansprüche, dadurch gekennzeichnet, daß der Absatz (13) des Rohrabschnitts (1) und/oder der Absatz (14) des Rohrabschnitts (2) zu beiden Seiten der umlaufenden Nut (6) Dichtungsflächen (7) aufweist, wodurch die Berührungsflächen zwischen den Absätzen (13) und (14) abgedichtet sind.

7. Hitzebeständige Rohrleitung nach einem der vorhergehenden Ansprüche, dadurch gekennzeichnet, daß einer der Rohrabschnitte (1, 2) aus einem metallischen Werkstoff und der andere Rohrabschnitt aus einem keramischen Werkstoff besteht.

8. Hitzebeständige Rohrleitung nach einem der vorhergehenden Ansprüche, dadurch gekennzeichnet, daß der keramische Rohrabschnitt einen Durchmesser von 500 bis 2000 mm und eine Wanddicke von 10 bis 50 mm aufweist.

9. Hitzebeständige Rohrleitung nach einem der vorhergehenden Ansprüche, dadurch gekennzeichnet, daß die Wandung des keramischen Rohrabschnitts eine mehrlagige Schichtstruktur aufweist.

10. Hitzebeständige Rohrleitung nach einem der vorhergehenden Ansprüche, dadurch gekennzeichnet, daß die Rohrabschnitte (1), (2) und (3) gemeinsam um die Längsachse drehbar gelagert sind.

11. Hitzebeständige Rohrleitung nach Anspruch 10, dadurch gekennzeichnet, daß um den Rohrabschnitt (3) eine gegenüber der Drehbewegung ruhende Kammer (8) angeordnet ist, die mit der Längsnut (4) in Verbindung steht.

12. Hitzebeständige Rohrleitung nach einem der Ansprüche 10 und 11, dadurch gekennzeichnet, daß die Kammer (8) über ein Dichtungssystem (11) mit den Rohrabschnitten (2, 3) verbunden ist.

13. Hitzebeständige Rohrleitung nach einem der vorhergehenden Ansprüche, dadurch gekennzeichnet, daß der keramische Rohrabschnitt aus einem oxidkeramischen Werkstoff besteht und eine Wärmeleitfähigkeit < 5 W/m/K und einen E-Modul > 10.000 N/mm$^2$ aufweist.

14. Hitzebeständige Rohrleitung nach einem der vorhergehenden Ansprüche, dadurch gekennzeichnet, daß der Rohrabschnitt (3) aus einem oxidkeramischen Werkstoff besteht und mit einem geschlossenen Ende zum Rohrabschnitt (1) und mit einem offenen Ende über einen aufgeschrumpften oder nach Metallisierung des keramischen Werkstoffes aufgelöteten Ring (10) aus einem metallischen Werkstoff zur Kammer (8) hin abgedichtet ist.

15. Hitzebeständige Rohrleitung nach einem der vorhergehenden Ansprüche, dadurch gekennzeichnet, daß mindestens ein Rohrabschnitt plasmagespritzter Keramik besteht.

16. Hitzebeständige Rohrleitung nach Anspruch 15, dadurch gekennzeichnet, daß auf den plasmagespritzten Rohrabschnitt eine Beschichtung auf Zirkonoxidbasis aufgebracht ist.

# FIG. 1

# FIG. 1a

# FIG. 2

Europäisches
Patentamt

**EUROPÄISCHER
RECHERCHENBERICHT**

Nummer der Anmeldung

**EP 91 11 1727**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 944 263 (J.F. ARNOLD)Zusammenfassung<br>* Anspruch 1; Abbildungen 1,2 * * <br>– – – | 1,2,4,10 | F 16 L 49/00 |
| A | GB-A-1 536 683 (BRITISH STEEL CORPORATION)<br>* Seite 1, linke Spalte, Zeile 38 - rechte Spalte, Zeile 89; Anspruch 1; Abbildung * * <br>– – – – – | 1,2,3 | |

**RECHERCHIERTE
SACHGEBIETE (Int. Cl.5)**

F 16 L
F 27 D
B 22 F

Der vorliegende Recherchenbericht wurde für alle Patentansprüche erstellt

| Recherchenort | Abschlußdatum der Recherche | Prüfer |
|---|---|---|
| Den Haag | 17 Oktober 91 | BUDTZ-OLSEN A. |